# EUROPEAN PATENT APPLICATION

(11) **EP 1 607 961 A2**
(43) Date of publication of application: **21.12.2005**
(21) Application number: 05104367.7
(22) Date of filing: 23.05.2005
(51) Int. Cl.: G11B 15/675

(54) **Cassette tape deck having a snap fit construction**

(30) Priority: 18.06.2004 KR 2004045416
(71) Applicant: Samsung Electronics Co, Ltd, Suwon-si, Gyeonggi-do 442-742 (KR)
(72) Inventor: Seo, Jae-kab, 301-402, Dongsuwon LG Village 3rd, Gyeonggi-do (KR); Kim, Jun-young, 108-1904, Dongsuwon LG Village 1st, Gyeonggi-do (KR); Kim, Bong-joo, 208-1001, Dongsuwon LG Village, Gyeonggi-do (KR); Cho, Young-ho, 101-502, Samsung Apartment, Suwon-si Gyeonggi-do (KR); BAIK, Chung-hum, Gyeonggi-do (KR); KIM, Myoung-joon, Gyeonggi-do (KR)
(74) Representative: Geary, Stuart Lloyd

(57) **Abstract**

A lever fixing apparatus of a cassette housing has at least one lever for connecting a cassette holder to a chassis and at least one snap fixing unit for connecting the lever to at least one of the cassette holder and the chassis in a snap manner to hingedly fix the lever thereto. The lever fixing apparatus can fix the lever to the chassis without using additional coupling parts. Accordingly, the number of processes for assembling the cassette holder to the housing bracket can be reduced and the working time is saved, thereby the productivity being increased.

## Description

The present invention relates to cassette tape deck wherein the opening and closing mechanism attached to a cassette holder is coupled to the chassis using a snap fit construction.

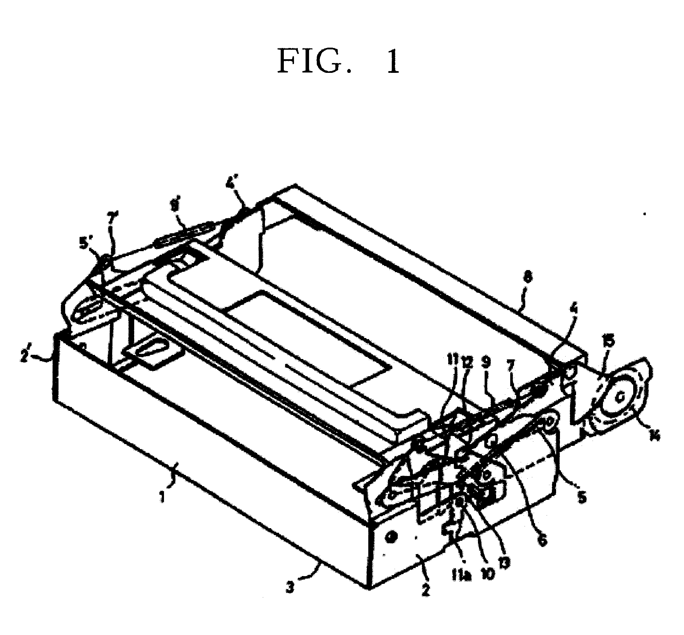

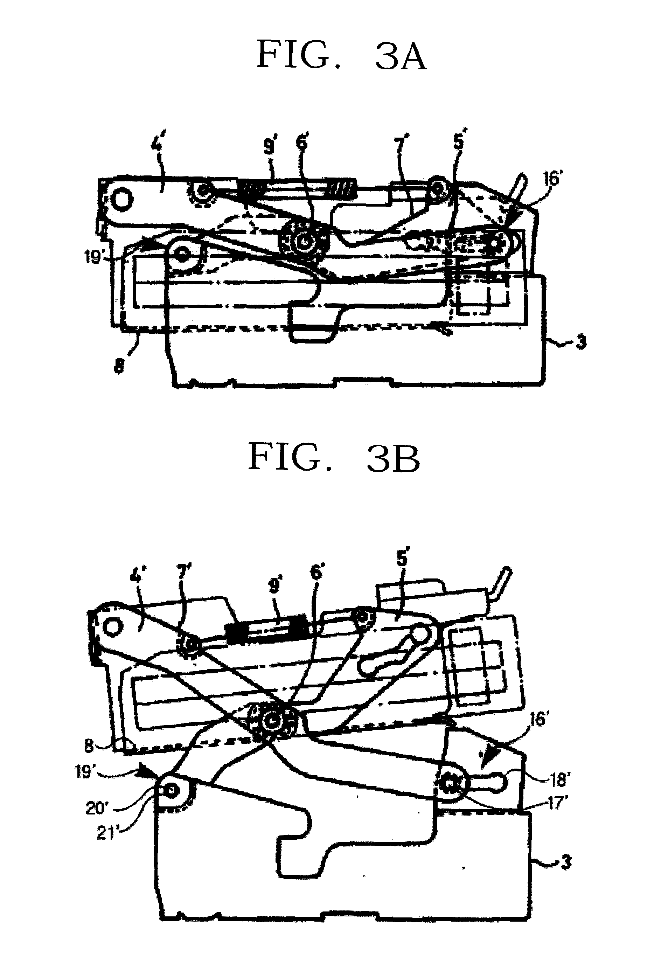

Generally, a magnetic recording and reproducing apparatus, such as a camcorder and a videocassette recorder (VCR), has a cassette housing for loading and unloading a cassette to and from a reel table of a deck. Figure 1 shows a conventional cassette housing of a magnetic recording and reproducing apparatus. A conventional cassette housing includes a chassis 3 having a front plate 1, side plates 2 and 2' provided at both sides and an opening and closing mechanism comprising X-shaped lever assemblies 7 and 7' for fixing first and second levers 4, 4' and 5, 5', which are connected to each other by connecting pins 6 and 6' (see Figure 3A), on the side plates 2 and 2' of the chassis 3, respectively. The cassette housing further comprises a cassette holder 8 fixed to the upper portion of the X-shaped lever assemblies 7 and 7', eject springs 9 and 9' for connecting the upper portions of the first and second levers 4, 4' and 5, 5' and a locking lever 11 rotatably connected to the side plate 2 of the chassis 3 by a shaft pin 10 and having an operating portion 11a provided at a lower portion of the locking lever 11. Yet further, the housing comprises a pin 12 fixed on a sidewall of the cassette holder 8 for providing a hook for the locking lever 11, a tension spring 13 for biasing the locking lever 11, a damper gear 14 rotatably coupled at a rear side of the wall of the cassette holder 8, and a sector gear 15 formed on an upper portion of the first lever 4 and engaged with the damper gear 14.

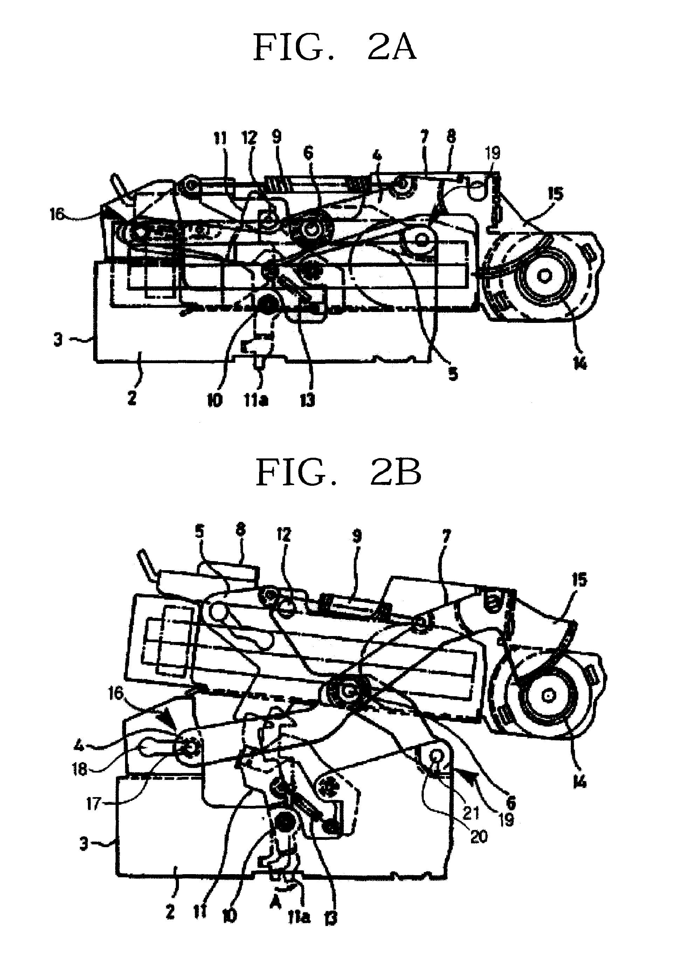

The operation of the above-described conventional cassette housing will be briefly described hereinafter. When the cassette holder 8 is inserted as shown in Figures 2A and 3A, the X-shaped lever assemblies 7 and 7' are folded up and pushed down as the eject springs 9 and 9' connected between the first and second levers 4, 4' and 5, 5', are tensioned. In this position, the locking lever 11 is hooked on the hook pin 12 of the cassette holder 8, thereby keeping the cassette holder 8 in the inserted position as shown in Figures 2A and 3A.

In order to eject the cassette holder 8 from the inserted position, the operation portion 11a of the locking lever 11 is pushed by a locking lever operating unit (not shown) in an direction indicated by arrow A as shown in Figure 2B . The locking lever 11 rotates counter clockwise around the shaft pin 10 against the biasing force of the tension spring 13, thereby releasing the locking lever 11 from the hook pin 12 of the cassette holder 8. As a result, the X-shaped lever assemblies 7 and 7' are unfolded (widened or opened) by the eject springs 9 and 9', thereby ejecting the cassette holder 8 as shown in Figures 2B and 3B.

In the above-described cassette housing, the cassette holder 8 is fixed on the side plates 2 and 2' of the chassis 3 by sliding guide units 16 and 16', formed on the side plates 2 and 2' and the first lever 4 and 4', and by pivots 19 and 19', formed on the side plates 2 and 2' and the second levers 5 and 5'. The assembly of the cassette holder in the cassette housing is performed by inserting projection pins 17 and 17' formed on lower portions of the first levers 4 and 4' into pin insertion holes 18 and 18' formed on the side plates 2 and 2' and the shaft pins 20 and 20' into shaft pin holes 21 and 21' formed on lower portions of the second levers 5 and 5' and the side plates 2 and 2' and by securing the connection between the projection pins and the chassis 3 by a suitable fixing means, for example, washers (not shown).

A disadvantage of the above described conventional cassette housing is that the assembly of the cassette holder in the cassette housing is complicated and time consuming, thereby diminishing productivity, as a result of the plurality of additional coupling parts such as the shaft pins 20 and 20' that need be inserted into the shaft pin holes.

Therefore, an object of the present invention is to provide a cassette tape deck that can be easily and quickly assembled and a magnetic recording and reproducing apparatus with the cassette deck therein.

In the cassette deck according to the invention, the opening and closing mechanism has a member pivotally attached to the chassis. The cassette deck according to the invention is characterised in that said member is attached to the chassis by an intermediate element which is pivotably coupled to the member and snap fitted to the chassis.

The intermediate element may be coupled to said member by a lug received in an arcuate keyhole slot means. The term "keyhole slot" is widely used to mean a slot having an enlarged region for receiving a T-section lug and a narrower region along which the lug can be slid but from which it cannot be withdrawn. The lug is preferably on the intermediate element with the arcuate keyhole slot means is in said member. However, the opposite configuration, i.e. the keyhole slot means in the intermediated element and the lug on the member, is also possible.

The intermediate element may include a detent engaging the chassis to hold the intermediate element in place.

The intermediate member may have a channel which receives a portion of the chassis, in which case the detent may be within the channel.

Additionally preferred features of the invention are defined in claims 7 to 26.

An embodiment of the present invention will now be described, by way of example, with reference to Figures 4 to 8C of the accompanying drawings, in which:
Figure 1 is a perspective view of a cassette housing of a conventional magnetic recording and reproducing apparatus;
Figures 2A and 2B are right side views of the cassette housing depicted in Figure 1;
Figures 3A and 3B are left side views of the cassette housing depicted in Figure 1;
Figure 4 is an exploded perspective view of a cassette tape deck and a housing according to the invention;
Figures 5A and 5B are respectively exploded right side and assembled right side views of the cassette housing depicted in Figure 4;
Figures 6A, 6B and 6C are respectively exploded right side, assembled right side and assembled perspective views of an intermediate element and a lever of the cassette housing depicted in Figures 5A and 5B;
Figures 7A and 7B are respectively exploded left side and assembled left side views of the cassette housing depicted in Figure 4; and
Figures 8A, 8B and 8C are respectively exploded left side, assembled left side and assembled perspective views of the intermediate element and a lever of the cassette housing depicted in Figures 5A and 5B.

Thus, detailed descriptions of well-known functions or constructions are omitted for the sake of clarity and conciseness.

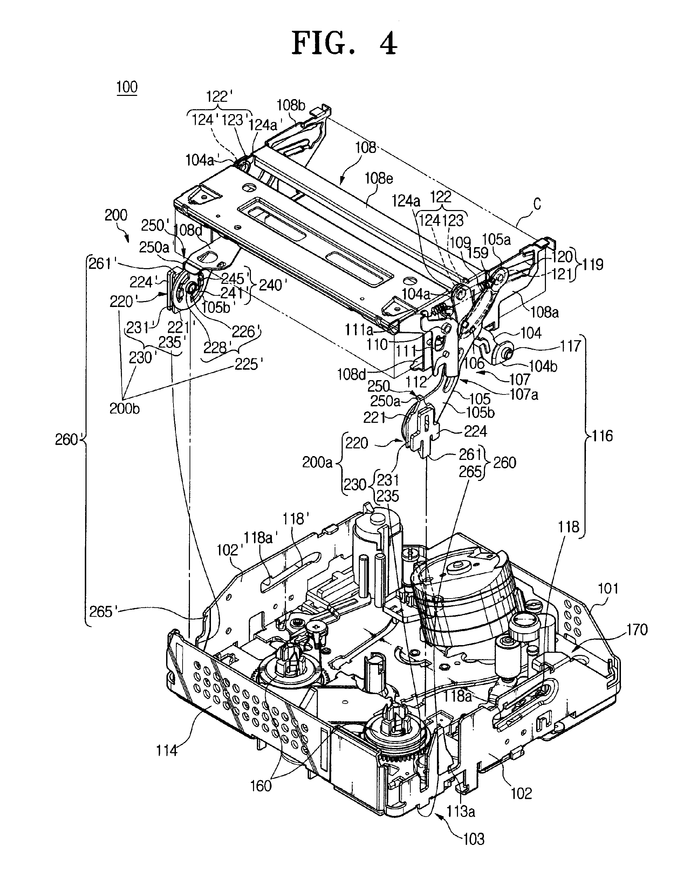

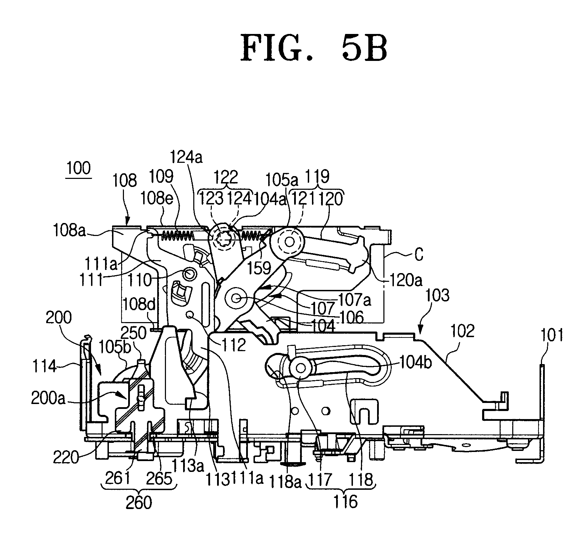

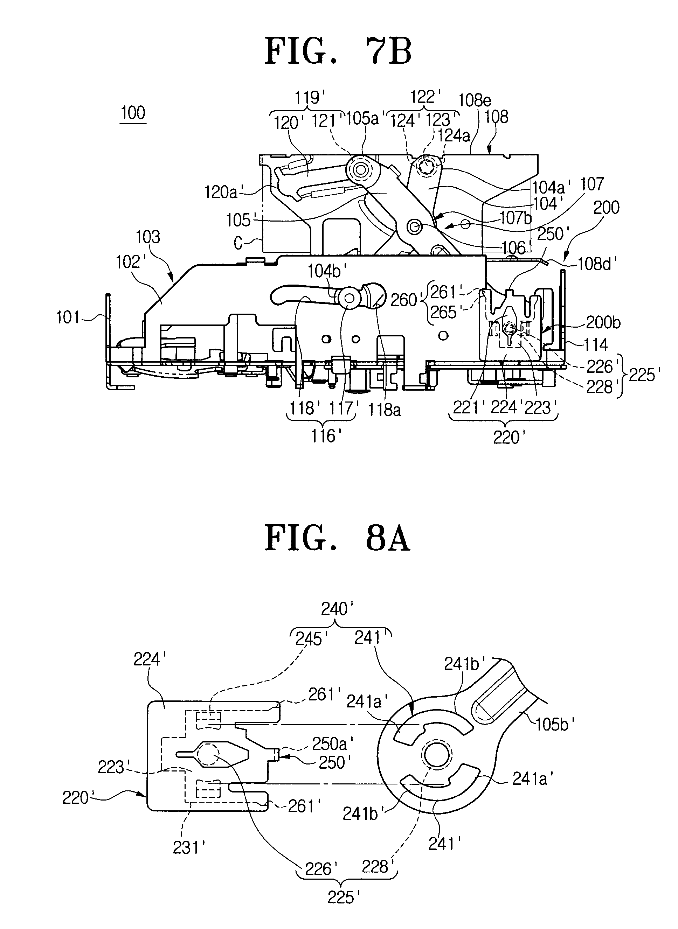

Figure 4 shows a cassette housing 100 of a magnetic recording and reproducing apparatus such as a VCR or a camcorder where an opening and closing mechanism between the chassis and the cassette holder according to the present invention is employed. As shown in the drawing, a cassette housing 100 comprises a chassis 103 fixed on a main frame (not shown) of a magnetic recording and reproducing apparatus. The cassette housing is provided on a cassette tape deck 170 and further comprises a cassette holder 108 holding a cassette C and an opening and closing mechanism 107 connecting the cassette holder 108 to the chassis 103. The opening and closing mechanism is provided to move the cassette holder 108 between an inserted position (not shown) in which the cassette holder 108 is seated on a reel table 160 on the deck 170 and an ejected position (see Figures 5B and 7B) in which the cassette holder 108 is ejected, thereby allowing the cassette C to be removed or inserted.

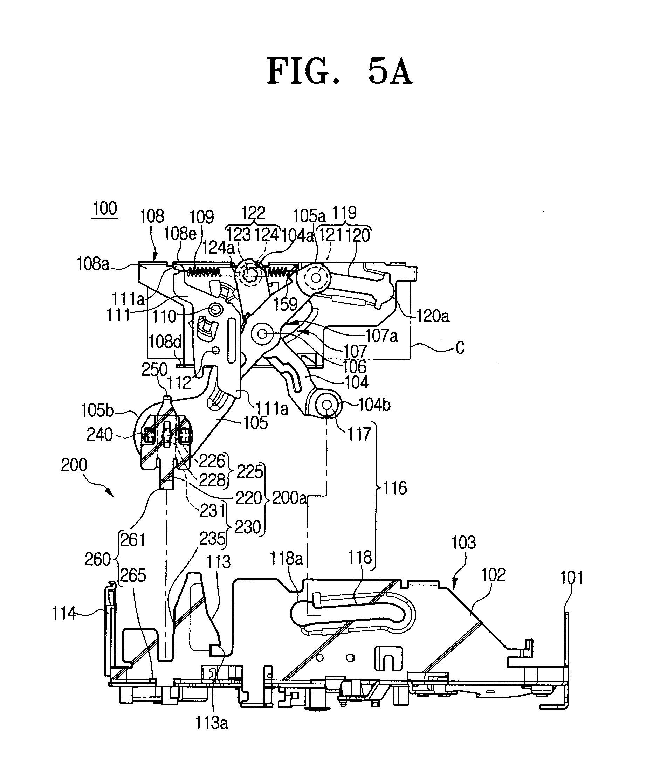

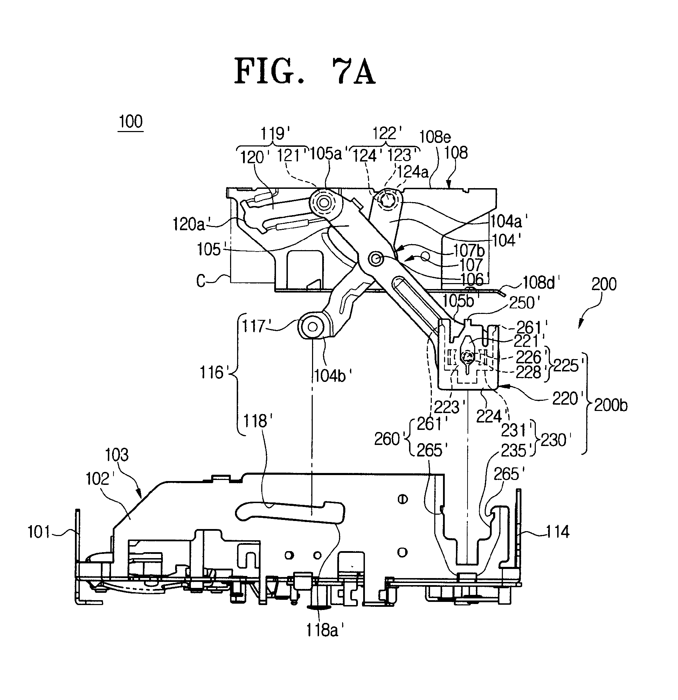

The chassis 103 comprises front and rear plates 114 and 101 and right and left plates 102 and 102'. The cassette holder 108 comprises right and left plates 108a and 108b connected to an upper plate 108e to define a space for receiving the cassette C. The right and left plates 108a and 108b are provided with holder supports 108d and 108d' respectively for allowing the cassette holder to rest on the deck 170. The opening and closing mechanism 107 comprises right and left X-shaped lever assemblies 107a and 107b (see Figures 5A and 7A) respectively installed on the right and left plates 108a and 108b of the cassette holder 108, a locking lever 111 for locking the cassette holder 108 in the inserted position, and an eject spring 109 for returning the cassette holder 108 to the ejected position when the locking lever 111 is released. The right and left X-shaped lever assemblies 107a and 107b are pivoted about points 106 and 106', respectively.

Since the right and left X-shaped lever assemblies 107a and 107b are mirror images of each other, only the right X-shaped lever assembly 107a will be described in detail. As shown in Figures 5A and 5B, the right hand side X-shaped lever assembly 107a comprises first and second levers 104 and 105. The first lever 104 comprises an upper end 104a pivotally fixed to the right plate 108a of the cassette holder 108 by a pivot 122 and a lower end 104b slidably supported on the right plate 102 of the chassis 103 by a slidable guide unit 116. The pivot 122 comprises a boss 123 formed on the upper end 104a of the first lever 104, a boss receiving hole 124 formed on the right plate 108a of the cassette holder 108, and a fixing washer 124a (see Figure 4) fixing the boss 123 in the boss receiving hole 124.

Similarly, on the left hand side of the cassette holder, a pivot 122', rotatably fixing the first lever 104' to the cassette holder 108, comprises a boss 123' formed on the upper end 104a' of the first left lever 104', a boss receiving hole 124' formed on the left plate 108a' of the cassette holder 108', and a fixing washer 124a' (see FIG. 4) fixing the boss 123' in the boss receiving hole 124'.

The slidable guide unit 116, on the right hand side of the cassette holder, comprises a boss 117, formed on the lower end 104b of the right lever 104, and a keyhole slot 118, formed on the right plate 102 of the chassis 103, and having an enlarged region 118a for receiving the sliding boss 117.

The second lever 105 of the right hand side X-shaped lever assembly 107a comprises an upper end 105a, slidably supported on the right plate 108a of the cassette holder 108 by a slidable guide unit 119 and a lower end 105b pivotally fixed on the chassis 103 in a snap manner by a right snap mechanism 200a of a mechanism 200 for attaching the opening and closing mechanism to the chassis according to the invention. The mechanism 200 for mounting the opening and closing mechanism on the chassis, in accordance with the invention, will be described below in more detail. The slidable guide unit 119 comprises a boss 121 formed on the upper end 105a of the second right lever 105 and a keyhole slot 120 formed on the right plate 108a and having an enlarged region 120a (See Figure 5A) for receiving the boss 117.

The mechanism according to the invention for mounting the opening and closing mechanism on the chassis comprises a right hand side snap mechanism 200a for pivotally fixing the lower end 105b of the second lever 105 of the right X-shaped lever assembly 107a to the right plate 102 of the chassis 103 using an intermediate element that can be snap-fitted onto the chassis, and a left hand side snap mechanism 200b (not shown) for pivotally fixing the lower end 105b' of the second lever 105' of the left X-shaped lever assembly 107b (see Figures 7A and 7B) to the left plate 102' of the chassis 103 using another intermediate element that can be snap-fitted onto the chassis.

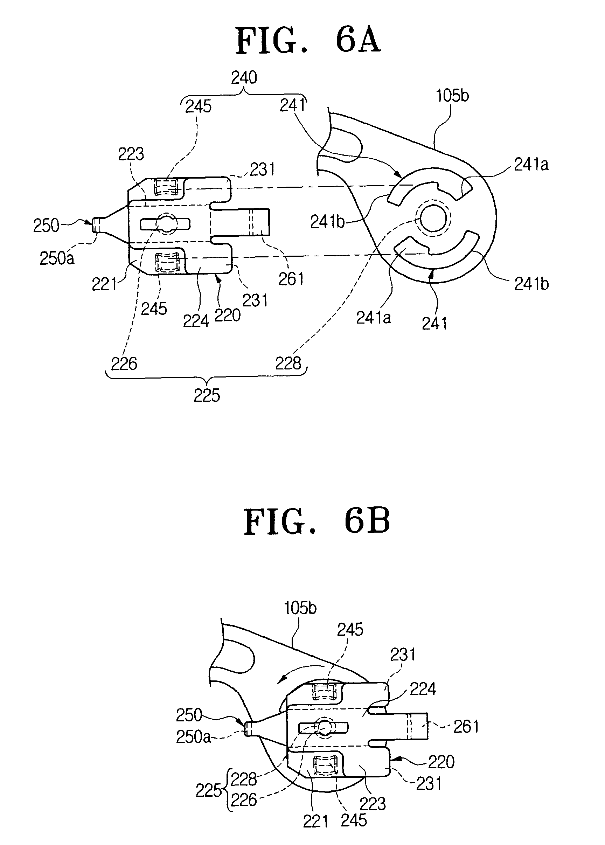

As shown in Figures 5A and 5B in more detail, the right snap mechanism 200a comprises an intermediate element 220 installed between the lower end 105b of the second lever 105 and the right plate 102 of the chassis 103, first coupling means 225 for rotatably fixing the lower end 105b of the second lever 105 to the intermediate element 220, and second coupling means 230 for snap-fitting the intermediate element 220 to the right plate 102 of the chassis 103. As shown in Figures 6A through 6C, the intermediate element 220 of the right hand side snap mechanism 220a comprises a first plate 221 formed in a substantially rectangular shape, a second plate 224 formed in a substantially triangular shape, and an intermediate connecting portion 223 connecting the first and second plates 221 and 224 to each other, defining an I-shaped section. The intermediate element 220 is assembled in the housing such that the first plate 221 faces the lower end 105b of the lever 105. The first plate comprises a boss 226 forming part of the first coupling means 225 and a lugs 245 for providing a separation preventing assembly 240 for preventing separation between the intermediate element and the lower end 105b of the lever 105. The separation preventing mechanism 240 also forms part of the first coupling means 225. The separation preventing mechanism 240 will be described in more detail below.

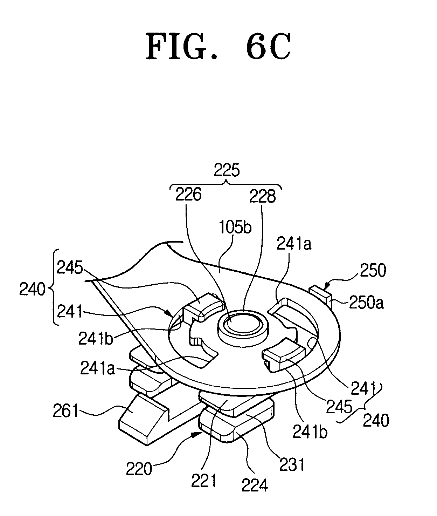

The intermediate connecting portion 223 (See Figure 6A) has a width identical or slightly less than that of a slot 235 (see Figure 5A) formed in the right plate 102. A channel 231 (See Figure 4 and 6C) for receiving the edge of the right plate around the slot 235 is formed along both edges of the intermediate connecting portion 223 between the first and second plates 221 and 224. The slot and the channel allow the intermediate element 220 to be attached to the right plate 102 of the chassis 103 and forms part of a the second coupling means, described in more detail hereinafter.

Referring to Figure 6A, the first coupling means 225 comprises a boss 226 formed on a surface of the first plate 221, which faces the lower end 105b of the second lever 105 and the lower end 105b of the second lever 105 comprises a boss receiving hole 228 facing the boss 226 of the coupling means 225. The coupling means 225 further comprises the separation preventing mechanism 240 for preventing the pivot boss 226 from being separated from the boss receiving hole 228 in the course of the pivoting operation of the lever 105. The separation preventing mechanism 240 comprises two lugs 245 formed on a surface of the first plate 221 of the intermediate element 220, which faces the lower end 105b of the second lever 105, and two keyhole slots 241 formed on the lower end 105b of the lever 105. Each of the keyhole slots 241 has an enlarged region 241a for allowing the lugs 245 to be inserted into the keyhole slots 241 and a guiding region 241 b for guiding the lugs 245 when the lever pivots with respect to the intermediate element 120. In order to prevent the lugs 245 coming lose from the keyhole slots 241, the enlarged region 241a is formed outside of the pivoting range of the lower end 105b of the lever 105.

In addition, the first coupling means 225 of the right snap mechanism 220a may comprise a position maintaining mechanism 250 for limiting the pivoting range of the lower end 105b and thereby preventing the lever 105 from being separated from the intermediate element 220 through the enlarged regions of the keyhole slots 241. As shown in Figure 6C, the position maintaining mechanism 250 may be formed of a projection 250a extending from the first plate 221 of the right intermediate element 220 to be in contact with the outer surface of the lower end 105b of the lever 105 on the right hand side of the housing.

The second coupling means 230 of the right hand side snap mechanism 200a comprises the slot 235 (See Figure 4) formed in the right plate 102 of the chassis 103 and the guide channel 231 formed in the intermediate element 220 for fitting around the edges of the right plate 102 defined by the slot 235. The guide channel 231 is, as shown in Figures 6A and 6B, formed along both edges of the intermediate connecting portion 223 between the first and second plates 221 and 224. The guide channel 231 has a width identical or slightly greater than the thickness of the right plate 102 of the chassis 103 so that the edges of the right plate fits between the first and second plate 221 and 224.

The second coupling means 230 further comprises a locking mechanism 260 (shown in Figure 4) for preventing the intermediate element 220 from being removed from the plate 102 of the chassis 103 by the guide channel 231 being separated from the edges of the right plate 102 defined by the slot 235. The locking mechanism 260 comprises a hook 261 formed at the side of the second plate 224 of the intermediate element 220 for hooking onto the protrusion 265 (See Figure 4) on the front lower portion of the right plate 102 of the chassis 103 when the snap mechanism is snapped onto the right plate 102 of the chassis 103.

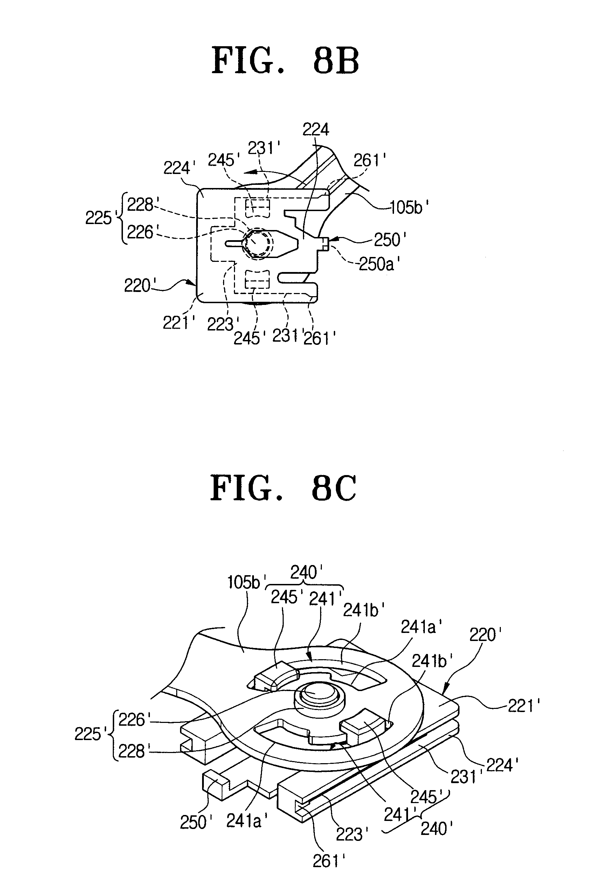

As shown in Figures 4 and 7A, the left snap mechanism 200b also comprises an intermediate element 220' installed between the lower end 105b' of the second lever 105' of the left X-shaped lever assembly 107b and the left plate 102' of the chassis 103, first coupling means 225', rotatably fixing the lower end 105b' of the second lever 105' to the intermediate element 220', and second coupling means 230' fixing the intermediate element 220' to the left plate 102' of the chassis 103. As shown in Figures 8A through 8C, the intermediate element 220' of the left hand snap mechanism 200b comprises first and second plates 221' and 224' that are formed in a substantially rectangular shape and an intermediate connecting portion 223' connecting the first and second plates 221' and 224' to each other, preferably defining an I-shaped section. Similarly to the first plate 221 of the right hand snap mechanism 200a, the first plate 221' of the left hand snap mechanism 200b is disposed facing the lower end 105b' of the lever 105' and is provided with a boss 226' and two lugs 245' for providing the separation preventing mechanism 240 that forms part of the first coupling means 225'. As shown in Figure 8B, the snap mechanism 200b also comprises a position maintaining member 250', similar to the position maintaining member 250 of the right hand side snap mechanism 200a. It is formed of a projection 250a' extending from the second plate 221' of the intermediate element 220' to be in contact with the outer surface of the lower end 105b' of the second left lever 105'.

Since the first coupling means 225', including the separation preventing mechanism 240' and the position maintaining member 250 of the snap mechanism 200b on the left hand side of the cassette holder are identical to those of the snap mechanism 200a, the detailed description thereof has been omitted.

The intermediate connecting portion 223' of the intermediate element 220' on the left hand side of the housing has a width identical or slightly less than that of a slot 235' (see Figures 4 and 7A) formed in the left plate 102' of the chassis 3. A guide channel 231' (See Figures 8A through 8C) for receiving the edges of the left plate 102' defined by the slot 235' (shown in Figure 4) is formed along both edges of the intermediate connection portion 223' between the first and second plates 221' and 224'. The slot and the channel allow the intermediate element 220' to be mounted in the slot 235' of the right plate 102' of the chassis 103'. The channel 231' has a width identical or slightly greater than the thickness of the left plate 102' of the chassis 103 so that the plate can fit in the channel 231'. The second coupling means 230' may further comprise a locking mechanism 260' preventing the intermediate element 220' from being removed from the left plate 102' of the chassis 103 by the guide channel 231' being separated from the edges of the left plate defined by the slot 235'. As shown in Figures 4, 7A, 7B and 8C, the locking mechanism 260' comprises two elastic protrusions 261' formed on two ends of the channel 231' and two recesses 265' formed facing the protrusions 261' on the edges of the left plate 102' defined by the sides of the slot 235'. The intermediate element is resiliently fixed to the chassis when the protrusions 261' engages with the recesses 265'.

Referring again to Figures 4, 5A and 5B, a locking lever 111 is rotatably coupled to the right plate 108a of the cassette holder 108 by the shaft pin 110. The locking lever 111 comprises a locking pin 112 to be engaged with the recess 113a formed on the side plate 102 of the chassis 103 when the cassette holder 108 is located in the inserted position.

When positioning the cassette holder 108 holding the cassette C on the reel table of the deck, the locking pin 112 of the locking lever 111 is engaged with the recess 113a of the part 113 of the sidewall 102 of the chassis 103, thereby keeping the cassette holder 108 in the inserted position. Conversely, when ejecting the cassette holder 108, the lower end 111a of the locking lever 111 is pushed by a locking lever driving unit (not shown) so that the locking pin 112 is released from the recess 113a. As a result, the right and left X-shaped lever assemblies 107a and 107b are extended (spread or opened) by the eject spring 109 and the cassette holder 108 is ejected to a position shown in Figures 5B and 7B.

The eject spring 109 is connected between the hook portion 159 of the upper end 105a of the second right lever 105 of the right X-shaped lever assembly 107a and the upper end 111a of the locking lever 111. The eject spring 109 is tensioned when the cassette holder 108 is in the inserted position. When the locking pin is released from the recess 113a, the eject spring 109 pulls on the upper end 105a of the first right lever 105. Accordingly, the right and left X-shaped lever assemblies 107a and 107b are unfolded.

In the above-described embodiment, the right and left snap mechanisms 200a and 200b are installed between the lower ends 105b and 105b' of the second right and left levers 105 and 105' and the right and left plates 102 and 102' of the chassis 103. However, the present invention is not limited to this case. For example, the identical snap mechanisms may be installed between the upper ends 104a and 104a' of the first right and left levers 104 and 104' and the right and left plates 108a and 108b of the cassette holder 108, replacing the right and left pivots 122 and 122'.

The assembling operation of the above-described cassette housing will now be described in more detail with reference to Figures 4 and 8. The assembly of the right and left X-shaped lever assemblies 107a and 107b to the cassette holder 108 is first performed. The upper ends 104a and 104a' of the respective right and left levers 104 and 104' are respectively fixed on the right and left plates 108a and 108b of the cassette holder 108 by the right and left pivots 122 and 122'. The upper ends 105a and 105a' of the respective second right and left levers 105 and 105' are fixed on the right and left plates 108a and 108b by the right and left slidable guide units 119 and 119'. Additionally, the eject spring 109 is connected to the upper end 105a of the first right lever 105.

As shown in Figures 6A through 6C, the lugs 245 of the separation preventing mechanism 240 of the first coupling means 225 on the right hand side are inserted into the enlarged regions 241a of the keyhole slots 241, the boss 226 is inserted into the boss receiving hole 228 of the lower end 105b of the second right lever 220, and then the intermediate element 220 of the right snap mechanism 200a is rotated counter clockwise. As a result, the intermediate element 220 is coupled to the lower end 105b of the second right lever 105. In a similar manner, as shown in Figures 8A through 8C, the intermediate element 220' of the snap fixing unit 200b on the left hand side is coupled to the lower end 105b' of the left second lever 105'.

Subsequently, the first right and left levers 104 and 104' can respectively be assembled on the right and left plates 102 and 102' of the chassis 103 by inserting the sliding bosses 117 and 117' of the right and left slidable guide units 116 and 116' into the keyhole slots 118 and 118' through enlarged regions 118a and 118a'.

The next stage of the assembly comprises mounting the intermediate elements 220, 220' in the slots 235 and 235' such that the edges of the side plates defined by the slots are inserted into the channels 231 and 231' formed on the intermediate elements 220 and 220'. The locking mechanisms 260, 260' on the left and right hand side are then engaged. On the right hand side, when the intermediate element 220 is fully inserted in the slot, the hook 261 is snap-fitted onto the protrusion 265 on the front lower portion of the right plate 102 of the chassis 103. On the left hand side, when the intermediate element 220' is almost fully inserted into the slots 235', the protrusions 261' are snap-fitted into the recesses 265' along the sides of the slot 235' such that that the intermediate element cannot removed from the slot 235'.

The cassette insertion and ejection operations of the cassette housing 100 will be described hereinafter.

The cassette insertion operation will be described first. After the cassette C has been inserted into the cassette holder 108 in the ejected position shown in Figure 5B and 7B, the cassette holder 108 is pressed downwards. As a result, the bosses 121 and 121' of the upper ends 105a and 105a' of the second right and left levers 105 and 105' slide to a position adjacent to the enlarged regions 120a and 120a' of the keyhole slots 120 and 120' and the eject spring 109 is tensioned. Similarly, the bosses 117 and 117' of the lower ends 104b and 104b' of the respective first right and left levers 104 and 104' slide to a position spaced away from the enlarged regions 118a of the keyhole slots 118 and 118' of the first right and left sliding guide units 116 and 116'. In addition, although the boss receiving holes 228 (not shown) and 228' of the first right and left coupling means 225 and 225' rotate clockwise with respect to the bosses 226 and 226' from a position shown in Figure 6B and 8B, the bosses 226 are not separated from the boss receiving holes 228 due to the separation preventing members 240 and 240'. Thus, the cassette holder 108 holding the cassette C is lowered onto the reel table of the deck and the locking pin 112 of the locking lever 111 is trapped in the recess 113a. As a result, the cassette holder 108 is kept in the inserted position.

The cassette ejection operation will now be described in more detail. When an eject button (not shown) is pressed, the locking lever driving unit is operated to allow the lower end 111a of the locking lever 111 to be pushed rightward in Figure 5B. As a result, the locking pin 112 is released from the recess 113a. Thereafter, the elastic force of the eject spring 109 forces the bosses 121 and 121' of the upper ends 105a and 105a' of the second right and left levers 105 and 105' to slide to a location spaced away from the enlarged regions 120a and 120' of the keyhole slots 120 and 120'. Similarly, the eject springs force the bosses 117 and 117' of the lower ends 104b and 104b' of the first right and left levers 104 and 104' to slide to a position spaced away from the enlarged regions 118a, 118' of the keyhole slots 118 and 118'. In addition, the lower ends 105b and 105b' of the second right and left levers 105 and 105' are returned to their initial positions depicted in Figures 6B and 8B as the holes 228 and 228' rotate counter clockwise with respect to the bosses 226 and 226'. As a result, the cassette holder 108 supported on the upper ends 104a, 104a' and 105a, 105a' of the first and second right and left levers 104a, 104a' and 105a, 105a' is ejected as shown in Figures 5A and 7B and the cassette C can be removed or inserted from the cassette holder 108.

According to embodiments of the present invention, since opening and closing mechanism connected to the cassette holder is designed to be mounted on the chassis using the snap mechanisms without using additional coupling parts, the number of processes for assembling the cassette holder in the housing can be reduced, thereby reducing assembly time and increasing productivity.

## Claims

1. A cassette tape deck (170) comprising:
chassis(103);
cassette holder (108); and
an opening and closing mechanism (107) between the chassis (103) and the cassette holder (108), the mechanism including a member (105) pivotably attached to the chassis;
**characterised in that** said member (105) is attached to the chassis (103) by an intermediate element (220, 220') which is pivotably coupled to the member and snap fitted to the chassis.

2. A deck according to claim 1, wherein the intermediate element (220, 220') is coupled to said member (105) by a lug (245) received in an arcuate keyhole slot means (241).

3. A deck according to claim 2, wherein the lug (245) is on the intermediate element (220, 220') and the arcuate keyhole slot means (241) is in said member (105).

4. A deck according to 1, 2 or 3, wherein the intermediate element (220, 220') has a channel (231, 231') which receives a portion of the chassis (103).

5. A deck according to any preceding claim, wherein the intermediate element (220, 220') includes a detent (261, 261') engaging the chassis (103) to hold the intermediate element in place.

6. A deck according to claim 4, wherein the intermediate element (220) includes a detent (261') in said channel (231') engaging the chassis (103) to hold the intermediate element in place.

7. A lever fixing apparatus of a cassette housing comprising at least one lever connecting a cassette holder to a chassis, and at least one snap fixing unit connecting the lever to at least one of the cassette holder and the chassis in a snap manner to hingedly fix the lever to the at least one of the cassette holder and the chassis.

8. The lever fixing apparatus of claim 7, wherein the snap fixing unit comprises:
an intermediate member installed between the lever and the at least one of the cassette holder and the chassis;
a first snap rotatably fixing the lever to the intermediate member; and
a second snap fixing the intermediate member to the chassis.

9. The lever fixing apparatus of claim 8, wherein the first snap comprises:
a pivot boss formed on one of the lever and the intermediate member; and
a pivot boss receiving hole formed on the other one of the lever and the intermediate member.

10. The lever fixing apparatus of claim 9, wherein the first snap further comprises a separation preventing member preventing the pivot boss from being separated from the pivot boss receiving hole when the lever is hingedly operated.

11. The lever fixing apparatus of claim 10, wherein the separation preventing member comprises:
at least one hook formed on one of the lever and the intermediate member; and
at least one hook receiving member formed the other one of the lever and the intermediate member and provided with an assembling enlarging hole in which the hook is inserted and a supporting hole rotatably supporting the hook inserted through the assembling enlarging hole by a predetermined angle.

12. The lever fixing apparatus of claim 11, wherein the assembling enlarging hole is formed out of a hinge operation range of the lever and the supporting hole is formed in a pivot operation range of the lever.

13. The lever fixing apparatus of claim 9, wherein the first snap further comprises a position maintaining member preventing the intermediate member from being separated from an assembling position during the hinge operation of the lever.

14. The lever fixing apparatus of claim 13, wherein the position maintaining member comprises a projection extending f
rom the intermediate member to be in contact with the lever.

15. The lever fixing apparatus of claim 8, wherein the second snap comprises:
a slide slot formed on one of the intermediate member and the chassis; and
a slot guide channel formed on the other one of the intermediate member and the chassis to correspond to the slide slot.

16. The lever fixing apparatus of claim 15, wherein the second snap further comprises a locking member preventing the slot guide channel from being separated from the slide slot.

17. The lever fixing apparatus of claim 16, wherein the locking member comprises;
a locking projection formed on one of the intermediate member and the chassis; and
a locking projection receiving portion formed on the other one of the intermediate member and the chassis.

18. A magnetic recording and reproducing apparatus comprising:
a cassette holder receiving a cassette;
a chassis installed on a deck; and
a cassette holder elevating unit supporting the cassette holder on the chassis to move the cassette holder between a seating position where the cassette holder is seated on a tape reel on the deck and an ejecting position where the cassette holder is ejected to remove or receive the cassette,
wherein the cassette holder elevating unit comprises:
a first lever having a first end hingedly fixed on the cassette holder and a second end slidably supported on the chassis;
a second lever having a first end slidably supported on the cassette holder and a second end hingedly fixed on the chassis; and
at least one snap fixing unit connecting at least one of the first end of the first lever and the second end of the second lever to at least one of the corresponding cassette holder and the corresponding chassis in a snap or hinge manner.

19. The magnetic recording and reproducing apparatus of claim 18, wherein the snap fixing unit comprises:
an intermediate member installed between the at least one of the first end of the first lever and the second end of the second lever and the at least one of the corresponding cassette holder and the corresponding chassis;
a first snap rotatably fixing the at least one of the first end of the first lever and the second end of the second lever on the intermediate member; and
a second snap fixing the intermediate member to the at least one of the cassette holder and the chassis.

20. The magnetic recording and reproducing apparatus of claim 19, wherein the first snap comprises:
a pivot boss formed on one of the at least one of the first end of the first lever and the second end of the second lever and the intermediate member; and
a pivot boss receiving hole formed on the other one of the at least one of the first end of the first lever and the second end of the second lever and the intermediate member.

21. The magnetic recording and reproducing apparatus of claim 20, wherein the first snap further comprises a separation preventing member preventing the pivot boss from being separated from the pivot boss receiving hole when one of the at least one of the first end of the first lever and the second end of the second lever is hingedly operated.

22. The magnetic recording and reproducing apparatus of claim 21, wherein the separation preventing member comprises:
a hook formed on one of the at least one of the first end of the first lever and the second end of the second lever and the intermediate member; and
a hook receiving member formed at the other one of the at least one of the first end of the first lever and the second end of the second lever and the intermediate member and provided with an assembling enlarging hole in which the hook is inserted and a supporting hole rotatably supporting the hook inserted through the assembling enlarging hole by a predetermined angle.

23. The magnetic recording and reproducing apparatus of claim 22, wherein the assembling enlarging hole is formed out of the hinge operation range of the hook and the supporting hole is formed in the pivot operation range of the hook.

24. The magnetic recording and reproducing apparatus of claim 19, wherein the second snap comprises:
a slide slot formed on one of the at least one of the cassette holder and the chassis and the intermediate member; and
a slot guide channel formed on the other one of the at least one of the cassette holder and the chassis and the intermediate member.

25. The magnetic recording and reproducing apparatus of claim 24, wherein the second snap further comprises a locking member preventing the slot guide channel from being separated from the slide slot.

26. The lever fixing apparatus of claim 25, wherein the locking member comprises;
a locking projection formed on one of the at least one of the cassette holder and the chassis and the intermediate member; and
a locking projection receiving portion formed on the other one of the at least one of the cassette holder and the chassis and the intermediate member.
